# EUROPEAN PATENT SPECIFICATION

(11) **EP 1 940 931 B1**
(45) Date of publication and mention of the grant of the patent: **15.12.2010**
(21) Application number: 06825292.3
(22) Date of filing: 02.10.2006
(51) Int. Cl.: C08K 3/00, C08L 75/12, C08L 75/08, C08L 97/00, C08L 97/02

(54) **A COMPOSITE ARTICLE AND METHOD OF MANUFACTURE USING AN ISOCYANATE-TERMINATED PREPOLYMER AS BINDER**
VERBUNDGEGENSTAND UND HERSTELLUNGSVERFAHREN UNTER VERWENDUNG EINES ISOCYANATTERMINIERTEN PREPOLYMERS ALS BINDEMITTEL
ARTICLE COMPOSITE ET PROCEDE DE FABRICATION ASSOCIE FAISANT APPEL A UN LIANT SE PRESENTANT SOUS LA FORME D'UN PREPOLYMERE A TERMINAISON ISOCYANATE

(30) Priority: 14.10.2005 US 726897 P
(43) Date of publication of application: 09.07.2008
(73) Proprietor: DOW GLOBAL TECHNOLOGIES INC., Midland MI 48674 (US)
(72) Inventor: PONCET, Philippe, F-67860 Rhinau (FR)
(74) Representative: Raynor, John
(86) International application number: PCT/US2006/038280
(87) International publication number: WO 2007/047073

(56) References cited:
- EP-A- 0 005 473
- WO-A-01/58976
- CA-A1- 2 179 145
- GB-A- 1 294 017
- GB-A- 2 035 336
- GB-A- 2 199 333
- GB-A- 2 364 708
- GB-A- 2 389 526
- US-A- 4 025 579
- US-A- 4 112 176
- US-A- 5 714 219
- US-A1- 2005 010 013

## Description

The present invention relates to a composite article of a bound particulate substance; a method of its fabrication employing as binder a select urethane-modified isocyanate adhesive; and to a laminate product wherein one or more layers comprises such a composite product.

The production of composite products from, for example, organic particles of rubber, synthetic resin, wood or inorganic particles such as sand or quartz, using polyurethane binders or adhesives, is generally known. For example, the use of two-component polyurethane binders for binding elastic particles has been described in German patent application DE 19 55 267 and in the Great Britain patent publications GB 1,373,923 and GB 1,359,761. Moisture curing one-component polyurethane binder is disclosed in the patent applications GB 1,384,619 and GB 1,294,017.

US 4,112,176 discloses a polyurethane ground rubber composite. WO 0158976 relates to a process for producing a polyurethane product with autocatalytic polyols to avoid the use of tertiary amines.

Typically, the composites based on known two-component polyurethane binders are obtained by mixing a polyisocyanate with a polyhydroxyl compound and compound simultaneously or subsequently with the particulate matter. The polyisocyanate in addition reacts with the moisture from the atmosphere. The proportions in which the two reactions take place depend, among other things, on the atmospheric humidity, and residual humidity within the particulate material, which affects the processing and end properties of the composite in a way which cannot easily be controlled. This disadvantage is mitigated to some extent by using one-component polyurethane binders which are hardened only by their reaction with the atmospheric moisture. Alternatively, the disadvantage may also be mitigated to a limited extent by selection of urethane catalyst present in the process.

One component binders typically consist of prepolymers that contain isocyanate groups and having been obtained from reaction of usually polyhydroxyl compound(s) with a molar excess of a polyisocyanate. The known one-component polyurethane binders, however, have various disadvantages depending on their chemical structure and reactivity. Prepolymers based on diphenylmethane-4,4'-diisocyanate have a tendency to crystallize at temperatures around 0°C or slightly above and, therefore have storage and use constraints in cold conditions. Prepolymers based on commercial diphenylmethane diisocyanate and which may additionally contain triisocyanates and tetraisocyanates as well as higher functional polyisocyanates of the diphenylmethane series, have a much reduced tendency to crystallize, but on the other hand their viscosity at room temperature is so high that they are difficult to process without subsequent modification of their viscosity by the addition of thinners or solvents or alternatively elevated processing temperatures. The presence of solvents is not desirable as there is the risk that certain particulate matter may swell due to the absorption of solvent and subsequently be released in the curing process with potential to cause problems, for example, dimensional instability. Further increasing awareness of environmental concerns associated with volatile organic emissions make it desirable to avoid the presence of such solvent.

With respect to reactivity of the polyurethane binder system, it is quite common to use a catalyst to modify the reactivity profile. Selection of the type of catalyst may limit end applications of the resulting composite.

An alternative means of modifying the reactivity profile of a polyurethane system is to employ starting materials which are inherently more reactive, for example polyols containing tertiary nitrogen atoms. Isocyanate-terminated prepolymers based on polyols containing tertiary nitrogen are disclosed in various publications including the patent publications US 3,317,481 and US 4,426,487. The publication, EP 1,268,598 suggests the general preparation of isocyanate-terminated prepolymers suitable for flexible polyurethane foam production from polyols derived from alternative amine-initiators.

It is an object of this invention to mitigate the above-described disadvantages of known polyurethane binders and provide for manufacture of composite articles with an alternative polyurethane binder system accommodating one or more desires of the end user for a system having easier processing, including cure times and sensitivity to humidity; fewer limitations associated with sensitivity to presence of solvents or catalysts; and enhanced mechanical performance.

The present invention relates to a composite article obtained from binding or adhesion of particulate matter with a polyurethane binder which is derived from a urethane-modified isocyanate obtained by reaction of an isocyanate with a polyether polyol derived from initiators containing a tertiary nitrogen. Such composite articles can be, for example, recreational matting or tiles, sports or running tracks, or flooring, or laminates.

In a first aspect this invention is a composite article composed of particulate matter substantially coated with a non-foamed polyurethane binder based on a urethane-modified isocyanate **characterized in that**, based on the total weight of the composite article:
a) the particulate matter is present in from 50 to 99 weight present; and
b) the non-foamed polyurethane binder is present in from 1 to 50 weight percent and wherein the urethane-modified isocyanate is the reaction product of:
   i) a stoichiometric excess of an aliphatic or aromatic polyisocyanate, or mixtures thereof; with
   ii) a polyol composition that comprises a polyether polyol (b1) having a molecular weight of from 1000 to 12000 and being obtained by alkoxylation of at least one initiator molecule of the formula

      HₘA-(CH₂)ₙ-N(R)-(CH₂)ₚ-AHₘ Formula (I)

      wherein n and p are independently integers from 2 to 6,
      A at each occurrence is independently oxygen, nitrogen, sulphur or hydrogen,
      with the proviso that only one of A can be hydrogen at one time,
      R is a C₁ to C₃ alkyl group,
      m is equal to 0 when A is hydrogen, is 1 when A is oxygen and is 2 when A is nitrogen, or

      H₂N-(CH₂)ₜ-N-(R)-H Formula (II)

      where t is an integer from 2 to 12 and
      R is a C₁ to C₃ alkyl group, and wherein the particulate matter
      is an elastomeric rubber.

In a second aspect, this invention is a process for manufacturing a composite comprising particulate matter substantially coated and bound together by a non-foamed polyurethane binder which comprises a first step of intimately contacting said particulate matter with a urethane-modified isocyanate composition and a subsequent step of permitting the resulting mixture to cure to give the composite article **characterized in that** the urethane-modified isocyanate and the particutale matter one as described above.

In a third aspect, this invention is a laminate article comprising a first layer being in contact with a second layer and wherein at least one of the first or second layers is a composite as mentioned herein above.

In a fourth aspect this invention relates to a mat with an upper tufted pile textile surface comprising tufts of yarn tufted into a substrate structure comprising an elastomeric backing derived from elastomeric crumb binder, as being a composite article as mentioned herein above.

It has been found the use of such a urethane-modified isocyanate, based on a polyol from a nitrogen containing initiator(s), as the polyurethane binder system provides a more desirable reaction profile with enhanced cure and better workability thus facilitating preparation of a composite such as, for example, a sports surface. The enhancements in the cure profile offer operational and economic features as there is a significant reduction in waiting time before being able to proceed with the next steps in a manufacturing activity.

Use of the polyurethane binder comprising such urethane-modified isocyanate derived from a polyol based on the nitrogen containing initiator(s) permits reduction or even elimination of catalysts typically present to accelerate the curing of the polyurethane binder. This has the advantage of offering systems that have reduced sensitivity to water or humidity content of the particulate matter thus avoiding susceptibility to foam formation. With such reduced water sensitivity; less time is required in drying and preparing the particulate matter for manufacture of the composite. The ability to reduce or eliminate presence of curing catalysts means that such polyurethnae binders systems are now accessible to certain end applications previously excluded due to sensitivity associated with such catalyst substances.

The composite article of this invention comprises particulate matter substantially coated with and bound together by a non-cellular polyurethane matrix, or binder, derived from the urethane-modified polyisocyanate disclosed herein. Typically the composite article will comprise the particulate matter in from 50 to 99, preferably in from 60 to 97, and more preferably in from 75 to 95 weight percent by based on total weight of the composite. Commensurately the non-foamed polyurethane matrix will constitute from 1 to 50, preferably from 3 to 40, and more preferably from 5 to 25 weight percent based on total weight of the composite.

Such composite article may be a compact article but in some instances, such as for example when being a laminate component of a mat, may be semi-compact article containing voids. When the composite article is a semi-compact article typically it will comprise from 50 to 95 percent by weight of particulate matter and from 5 to 95 percent by weight of the non-cellular polyurethane binder and wherein the void volume of the composite is from 15 to 85 percent by volume.

The particulate matter for the composite of this invention is an elastomeric rubber such as derived from styrene and butadiene, and which optionally can be recovered/recycled materials. Such particulate matter is eminently suitable for the manufacture of composites having utility as surfaces, sound absorbing materials and upper or under layers in recreational surfaces or pavement or roofing or flooring such as a mat, pad or tile for carpeting. When preparing composite articles from the preferred types of particulate organic matter advantageously the average particle size in its longest dimension is less than about 20 mm, preferably less than about 15 mm and more preferably less than about 10 mm. For convenience of handling and processing, advantageously the average particles size is at least 1 mm, and preferably at least 3 mm in its longest dimension.

The non cellular polyurethane binder can be a two component polyurethane binder obtained by reaction of an isocyanate with an isocyanate-reactive material, other than water. Alternatively it can be a one-component binder obtained by curing of an isocyanate in the absence of other hydroxyl-containing substances, besides water. In both instances the isocyanate is a urethane-modified isocyanate obtained by reaction of a molar excess of a polyisocyanate with a polyol composition comprising a polyether polyol based on an initiator having a tertiary nitrogen atom. The urethane-modified isocyanate typically will have an average isocyanate content of from 1 to 23, preferably from 5 to 18 and more preferably from 7 to 14 weight percent.

The polyol composition used in preparation of the urethane-modified isocyanate may comprise one or more additional polyol(s) which are not initiated with an initiator containing a nitrogen atom. Such polyols are well known in the art and are described in such publications as High Polymers, Vol. XVI; "Polyurethanes, Chemistry and Technology", by Saunders and Frisch, Interscience Publishers, New York, Vol. I, pp. 32-42, 44-54 (1962) and Vol II. Pp. 5-6, 198-199 (1964); Organic Polymer Chemistry by K. J. Saunders, Chapman and Hall, London, pp. 323-325 (1973); and Developments in Polyurethanes, Vol. I, J.M. Burst, ed., Applied Science Publishers, pp. 1-76 (1978). Representative of suitable polyols include polyester, polylactone, polyether, polyolefin, polycarbonate polyols, and various other polyols. Preferably the additional polyol is a polyether or polyester polyol. If desired, the polyol formulation may also contain copolymer polyols such as those of styrene/acrylonitrile (SAN), polyisocyanate polyaddition products (PIPA) or polyurea polyols (PHD). The additional polyol(s) generally have a nominal hydroxyl functionality of 1.6 to 8 and a molecular weight of 1000 to 12,000.

The amount of polyol (b1) from the nitrogen-containing initiator present in the composition when preparing the urethane-modified isocyanate can be varied depending on degree of intrinsic reactivity required within the polyurethane binder systems for a given end application. Generally suitable compositions are when polyol (b1) is present in an amount of from 5 to 60, preferably from 5 to 50 and more preferably from 5 to 40 weight percent of the total weight of the polyol composition. The remainder of the polyol is from non-nitrogen containing initiators and the total weight percent of polyol is 100.

Polyol (b1) used to prepare the urethane-modified isocyanate is a substance typically having an average molecular weight of from 1000 to 12000 Daltons, preferably from 1500 to 8000, and more preferably from 2000 to 6000 and is obtained by alkoxylation of an initiator comprising at least one molecule of the formula

HₘA-(CH₂)ₙ-N(R)-(CH₂)ₚ-AHₘ Formula (I)

wherein n and p are independently integers from 2 to 6; A at each occurrence is independently oxygen, nitrogen, sulphur or hydrogen, with the proviso that only one of A can be hydrogen at one time;
R is a C₁ to C₃ alkyl group; m is equal to 0 when A is hydrogen, m is 1 when A is oxygen and m is 2 when A is nitrogen,
or of the formula

H₂N-(CH₂)ₜ-N-(R)-H Formula (II)

where t is an integer from 2 to 12 and
R is a C₁ to C₃ alkyl group.

In a preferred embodiment of Formula I, R is methyl. In another preferred embodiment R is methyl and n and p are integers of the same value. In a more preferred embodiment n and p are an integer of 2 to 4. Preferably when A is not hydrogen, A at each occurrence will be either oxygen or nitrogen. In a more preferred embodiment one A will be oxygen and the other A will be nitrogen, and the final polyol will be a triol. In a yet more preferred embodiment, A is nitrogen in all occurrences and the final polyol will be a tetrol.

The alkyl amines of Formula I are commercially available or can be made by techniques known in the art, such as U.S. Patent 4,605,772. For example, methylamine is reacted with the appropriate alkylene oxide for producing compounds where A is oxygen. Preferably the alkylene oxide is ethylene oxide (EO), propylene oxide (PO), or butylene oxides (BO), which gives a preferred range of 2 to 4 for n when each A is oxygen. Example of such initiator compounds are N-methyldiethanolamine, N-methyldipropanolamine, N-methyldibutanol-amine, N-methylethanol-propananol-amine.

For producing compounds where each A is nitrogen, methyl amine can be reacted with any known reactive group that reacts with an amine and contains additional nitrogen. For example, 2 moles of X(CH₂)ₙNR'R" can be reacted with one mole of methylamine where X represents chlorine, bromine or iodine; R' and R" can be H or an alkyl group; and n is as defined above. Examples of such initiator compounds include 3,3'-diamino-N-methyldipropylamine, 2,2'-diamino-N-methyldiethylamine, 2,3-diamino-N-methyl-ethyl-propylamine.

For producing compounds where one A is nitrogen and one A is oxygen, one can use a process such as the one described in JP 09,012,516.

In one embodiment of Formula II, R is methyl. Preferable t in Formula II is an integer of 2 to 10, more preferably 2 to 6 and most preferred from 2 to 4. In a preferred embodiment, R is methyl and m is an integer of 2 to 4. Compounds of Formula II can be made by standard procedures known in the art. Examples of commercially available compounds of Formula II include N-methyl-1,2-ethanediamine and N-methyl-1,3-propanediamine.

The production of polyols by alkoxylation of an initiator can be done by procedures well known in the art. In general, a polyol is made by the addition of an alkylene oxide (EO, PO, or BO), or a combination of alkylene oxides to the initiator by anionic or cationic reaction or use of double metal cyanide (DMC) catalyst. For some applications only one alkylene oxide monomer is used, for other applications a blend of monomers is used and in some cases a sequential addition of monomers is preferred, such as PO followed by an EO feed or EO followed by PO.

In the present invention the polyisocyanate reacted in excess with the above described polyol composition comprises an aliphatic polyisocyanate or an aromatic polyisocyanate, or mixtures thereof. Suitable aliphatic polyisocyanates include hexamethylene diisocyanate and isophorone diisocyanate. Preferred are aromatic polyisocyanates including toluene diisocyanate, methylene diphenylisocyanate (MDI), including isomers thereof, and polymethylene polyphenylisocyanate (crude MDI). In a preferred embodiment the aromatic polyisocyanate is an isocyanate mixture that contains the 2-ring methylene diphenylisocyanate (MDI) isomers in at least about 40, preferably at least 50 and more preferably at least 60 weight percent of total isocyanate present. Preferably the MDI comprises the 2,4'- and 4,4'-methylene diphenylisocyanate isomers in a molar ratio of from 10:90 to 90:10, preferably from 20:80 to 80:20, more preferably in from 20:80 to 70:30. The balance of the isocyanate mixture when not methylene diphenylisocyanate can comprise toluene diisocyanate, hexamethylene diisocyanate, isophorone diisocyanate, polymethylene polyphenylisocyanate, carbodiimide or allophonate or uretonimine adducts of methylene diphenylisocyanate and mixtures thereof. Preferred isocyanates to make up the balance of the composition are polymethylene polyphenylisocyanate, carbodiimide or allophonate or uretonimine adducts of methylene diphenylisocyanate.

The urethane-modified isocyanate is prepared in a conventional way by combining the isocyanate and the polyol at 20-100°C and if desired, in the presence of urethane-forming catalyst, such as a tertiary amine or tin compound. The relative amounts of the isocyanate and the polyol are chosen in such a way as to arrive at the desired free NCO content of the final product. The preparation of the prepolymer is a routine operation for those skilled in the art; see for example patent publication WO2004074343.

The present invention relates to a composite of particulate matter bound by a non-foamed polyurethane derived from the described urethane-modified isocyanate; and to laminate articles where one or more lamella can be composed of such a composite article. Methods of manufacturing such composite articles and laminates are extensively documented in the literature. Examples of such publications include US Patents 4,112,176; 4,025,579; 4,107,100; 4,614,686; 4,857,368; 5,514,722; 5,472,743; 6,565,918; 6.649,696; US Patent Application 2002/022086; EP Publication 1,312,469; GB Patents 1,373,923; 1.359,761; 1,384,619; 1,509,108; and 2,035,336.

In brief, a process for manufacturing a composite being a particulate matter substantially coated and bound together by a non-foamed polyurethane binder comprises a first step of intimately contacting said particulate matter with a urethane-modified isocyanate composition and a subsequent step of permitting the resulting mixture to cure and give the composite article.

Ground rubber elastomeric composites useful in surfacings, sound absorbing materials, underlayers for recreational surfaces or other pavement or flooring can readily be prepared by coating the particulate matter, typically a ground vulcanized rubber with the polyurethane binder and bringing this mixture to a surface where it spread out and allowed to cure.

The urethane modified isocyanates of the present invention may also be used to prepare composites from inorganic particulate matter. For example, manufacture of artificial stone where quartz sand is bound using a polyurethane binder is disclosed in GB Patent 1,294,017.

Methods of manufacturing a mat with a textile surface, that can be composed of polypropylene fabric or tufted nylon or knitted polyester fabric or woven polyester; and an elastomer backing layer that includes elastomer crumbs, notably vulcanized rubber, and a polyurethane binder are disclosed in the following publications, EP-A-1,518,668; EP-A-1511894; EP-A-1,511,893; and EP-1,549,797. In summary, such method involves mixing elastomer crumbs and a binder, depositing the crumb/binder mixture in a layer, placing a textile surface element on the layer to form a mat assembly, and pressing the mat assembly while setting the binder, so that the elastomer crumbs are consolidated to form an elastomer backing that includes voids between the elastomer crumbs, and the textile surface element is bonded to the elastomer backing.

The following examples are given to illustrate the invention and should not be interpreted as limiting in anyway. Unless stated otherwise, all parts and percentages are given by weight. VORANOL, ISONATE, and VORANATE are trademarks of The Dow Chemical Company.

| | |
|---|---|
| Polyol 1: | a proprietary polyol from The Dow Chemical Company having a hydroxyl equivalent weight of about 1700 and being obtained by reacting 3,3'-diamino-N-methyldipropylamine with an EO/PO mix feed in the weight ratio of 12:88. |
| Polyol A: | a glycerine EO/PO polyol having a hydroxyl equivalent weight of about 1700 available from The Dow Chemical Company as VORANOL 1421. |
| Polyol B: | a 4000 molecular weight diol based on propylene oxide with ethylene oxide capping available from The Dow Chemical Company as VORANOL EP 1900. |

| | |
|---|---|
| Polyisocyanate A: | A carbodiimide modified MDI available from The Dow Chemical Company as ISONATE 143L. |
| Polyisocyanate B: | A 50:50 weight blend of 2,4'- and 4,4'-MDI available from The Dow Chemical Company as ISONATE OP 50. |
| Polyisocyanate C: | A crude methylene diphenylisocyanate available from The Dow Chemical Company as VORANATE 229. |

### Example 1:

A polyurethane binder according to the present invention (Binder 1 or 2) is prepared and compared in performance to Binders A and B considered representative of the general state of the art. The urethane-modified isocyanate compositions are prepared by reacting polyisocyanate with polyol as indicated below in Table I. The obtained binders are then mixed with a styrene-butadiene particulate rubber in the presence of a small amount of residual water and optionally in the presence of an amine catalyst JEFFCAT DMDEE available from Huntsman Chemicals and the resulting mixture is trowelled into a mold held a temperature of about 90°C to give a tile having a thickness of 40 mm. The open time and drying time of the composition is reported in Table 1. The "open time" represents the period of time during which a mixture may be manipulated; longer openings times are generally advantageous in the field. The "drying time" represents the period of time in which the mixture must rest and cure before the next manufacturing operation can proceed; shorter "drying times" are generally desired in the field.

Binders 1 and 2 provide an attractive open time and provide a drying time superior to Binders A and B; and noticeably in the absence of a curing catalyst.

**Table 1:**

| Blinder (parts by weight) | 1 | 2 | A | B |
|---|---|---|---|---|
| Polyisocyanate A | 11.7 | 11.7 | 38.5 | |
| Polyisocyanate B | 24 | 24 | / | 29.7 |
| Polyisocyanate C | / | | / | 7.4 |
| Benzoylchloride | 0.1 | 0.1 | 0.1 | 0.1 |
| | | | | |
| Polyol 1 | 28.8 | 19.6 | / | / |
| Polyol A | / | / | 12.0 | |
| Polyol B | 35.6 | 44.9 | 49.5 | 62.2 |
| | | | | |
| Properties: | | | | |
| NCO % | 9.3 | 9.4 | 9.8 | 10.6 |
| Viscosity (mPas) at 20°C | 5900 | 5350 | 5980 | 3200 |
| | | | | |
| Styrene-butadiene rubber, particle size ∼ 3 mm // water content ∼ 0.5% | 100 | 100 | 100 | 100 |
| Amount of Binder | 9 | 9 | 9 | 9 |
| Jeffcat DMDEE | / | / | 0.75 | / |
| Open time (min) | 3.5-4.0 | 3.5-4.0 | 1.5-2.0 | 4.0-4.5 |
| Drying time (min) | 10 | 14 | 11 | 17 |

## Claims

1. A composite article composed of particulate matter substantially coated with a non- foamed polyurethane binder based on a urethane-moditied isocyanate **characterized in that**, based on total weight of the composite article:
a) the particulate matter is present in from 50 to 99 weight percent; and
b) the non-foamed polyurethane binder is present in from 1 to 50 weight percent and wherein urethane-modified isocyanate is the reaction product of:
i) a stoichiometric excess of an aliphatic or aromatic polyisocyanate, or mixtures thereof; with
ii) a polyol composition that comprises a polyether polyol (b1) having a molecular weight of from 1000 to 12000 and being obtained by alkoxylation of at least one initiator molecule of the formula
HₘA-(CH₂)ₙ-N(R)-(CH₂)ₚ-AHₘ Formula (I)
wherein n and p are independently integers from 2 to 6,
A at each occurrence is independently oxygen, nitrogen, sulphur or hydrogen, with the proviso that only one of A can be hydrogen at one time,
R is a C₁ to C₃ alkyl group,
m is equal to 0 when A is hydrogen, is 1 when A is oxygen and is 2 when A is nitrogen, or of the formula
H₂N-(CH₂)ₜ-N-(R)-H Formula (II)
where t is an integer from 2 to 12 and
R is a C₁ to C₃ alkyl group
and wherein the particulate matter is an elastomeric rubber.

2. A process for manufacturing a composite article being of particulate matter substantially coated and bound together by a non-foamed polyurethane binder in which said process comprises a first step of intimately contacting said particulate matter with a urethane-modified isocyanate composition and a subsequent step of permitting the resulting mixture to cure and give the composite article **characterized in**
**that** the urethane-modified isocyanate is the reaction product of:
a) a stoichiometric excess of an aliphatic or aromatic polyisocyanate, or mixtures thereof; with b) a polyol composition that comprises a polyether polyol (b1) having a molecular weight of from 1000 to 12000 and being obtained by alkoxylation of at least one initiator molecule of the formula
HₘA-(CH₂)ₙ-N(R)-(CH₂)ₚ-AHₘ Formula (I)
wherein n and p are independently integers from 2 to 6,
A at each occurrence is independently oxygen, nitrogen, sulphur or hydrogen, with the proviso that only one of A can be hydrogen at one time,
R is a C₁ to C₃ alkyl group, m is equal to 0 when A is hydrogen, is I when A is oxygen and is 2 when A is nitrogen, or
H₂N-(CH₂)ₜ-N-(R)-H Formula (I)
where t is an integer from 2 to 12 and R is a C₁ to C₃ alkyl group
and wherein the particulate matter is an elastomeric rubber.

3. A laminate article having a first layer being in contact with a second layer and wherein at least one of the first or second layers is a composite as claimed in Claim 1.

4. A mat with a tufted pile textile surface comprising tufts of yarn tufted into a yarn tufting substrate and an elastomer backing, of elastomer crumb and binder, being a composite article as claimed in Claim 1.

5. The mat of Claim 4 obtained by the method including mixing elastomer crumbs and a binder, depositing the crumb/binder mixture in a layer, placing a textile surface element on the layer to form a mat assembly, and pressing the mat assembly while setting the binder, so that the elastomer crumbs are consolidated to form an elastomer backing that includes voids between the elastomer crumbs, and the textile surface element is bonded to the elastomer backing.

## Patentansprüche

1. Verbundgegenstand aus partikulärem Stoff, der im Wesentlichen mit einem nichtgeschäumten Polyurethan-Bindemittel auf der Basis eines urethanmodifizierten Isocyanats beschichtet ist, **dadurch gekennzeichnet, dass**, bezogen auf das Gesamtgewicht des Verbundgegenstands:
a) der partikuläre Stoff in einer Menge von 50 bis 99 Gew.-% vorliegt; und
b) das nichtgeschäumte Polyurethan-Bindemittel in einer Menge von 1 bis 50 Gew.-% vorliegt, und wobei das urethanmodifizierte Isocyanat das Reaktionsprodukt ist von:
i) einem stöchiometrischen Überschuss eines aliphatischen oder aromatischen Polyisocyanats oder von Mischungen davon; mit
ii) einer Polyolzusammensetzung, die ein Polyetherpolyol (b1) mit einem Molekulargewicht von 1000 bis 12000 umfasst, erhalten durch Alkoxylierung von mindestens einem Initiatormolekül der Formel
HₘA-(CH₂)ₙ-N(R)-(CH₂)ₚ-AHₘ Formula (I)
worin n und p unabhängig voneinander ganze Zahlen von 2 bis 6 sind,
A bei jedem Vorkommen unabhängig voneinander Sauerstoff, Stickstoff, Schwefel oder Wasserstoff ist, mit der Maßgabe, dass nur ein A gleichzeitig Wasserstoff sein kann,
R eine C₁- bis C₃-Alkylgruppe ist,
m gleich 0 ist, wenn A Wasserstoff ist; gleich 1 ist, wenn A Sauerstoff ist; und gleich 2 ist, wenn A Stickstoff ist oder folgende Formel hat:
H₂N-(CH₂)ₜ-N-(R)-H Formel (II)
wo t eine ganze Zahl von 2 bis 12 ist, und
R eine C₁- bis C₃-Alkylgruppe ist,
und wobei der partikuläre Stoff ein elastomerer Kautschuk ist.

2. Verfahren zur Herstellung eines Verbundgegenstands aus partikulärem Stoff, der im Wesentlichen mit einem nichtgeschäumten Polyurethan-Bindemittel beschichtet und damit gebunden ist, wobei das Verfahren einen ersten Schritt umfasst, bei dem der partikuläre Stoff in engen Kontakt mit einer urethanmodifizierten Isocyanatzusammensetzung gebracht wird, und einen anschließenden Schritt, bei dem die resultierende Mischung aushärten gelassen wird, so dass man den Verbundgegenstand erhält, **dadurch gekennzeichnet, dass** das urethanmodifizierte Isocyanat das Reaktionsprodukt ist von:
a) einem stöchiometrischen Überschuss eines aliphatischen oder aromatischen Polyisocyanats oder von Mischungen davon; mit b) einer Polyolzusammensetzung, die ein Polyetherpolyol (b1) mit einem Molekulargewicht von 1000 bis 12000 umfasst, erhalten durch Alkoxylierung mindestens eines Initiatormoleküls der Formel
HₘA-(CH₂)ₙ-N(R)-(CH₂)ₚ-AHₘ Formel (I)
worin n und p unabhängig voneinander ganze Zahlen von 2 bis 6 sind,
A bei jedem Vorkommen unabhängig voneinander Sauerstoff, Stickstoff, Schwefel oder Wasserstoff ist, mit der Maßgabe, dass nur ein A gleichzeitig Wasserstoff sein kann,
R eine C₁- bis C₃-Alkylgruppe ist, m gleich 0 ist, wenn A Wasserstoff ist; gleich 1 ist, wenn A Sauerstoff ist; und gleich 2 ist, wenn A Stickstoff ist oder folgende Formel hat:
H₂N-(CH₂)ₜ-N-(R)-H Formel (II)
wo t eine ganze Zahl von 2 bis 12 ist, und R eine C₁- bis C₃-Alkylgruppe ist,
und wobei der partikuläre Stoff ein elastomerer Kautschuk ist.

3. Laminatgegenstand mit einer ersten Schicht, die mit einer zweiten Schicht in Kontakt steht und wobei mindestens eine von der ersten oder der zweiten Schicht ein Verbundstoff nach Anspruch 1 ist.

4. Matte mit einer Tuftingflor-Textiloberfläche, die zu einem Tuftingsubstrat getuftete Garnbüschel und ein Elastomergrundgewebe aus Elastomerkrümeln und Bindemittel umfasst, das ein Verbundgegenstand nach Anspruch 1 ist.

5. Matte nach Anspruch 4, die man erhält nach dem Verfahren, bei dem Elastomerkrümel und ein Bindemittel gemischt werden, das Krümel/Bindemittel-Gemisch in einer Schicht abgelagert wird, ein Textiloberflächenelement auf die Schicht gelegt wird, um eine Mattenanordnung zu bilden, und die Mattenanordnung gepresst wird, während das Bindemittel fest wird, so dass die Elastomerkrümel zu einem Elastomergrundgewebe verdichtet werden, das Hohlräume zwischen den Elastomerkrümeln aufweist, und das Textiloberflächenelement mit dem Elastomergrundgewebe verklebt wird.

## Revendications

1. Article composite, constitué d'un matériau en particules notablement revêtues d'un liant de type polyuréthane non expansé en mousse,
à base d'un isocyanate modifié en uréthane, **caractérisé en ce qu'**il comprend, en poids rapporté au poids total de l'article composite :
a) de 50 à 99 % du matériau en particules,
b) et de 1 à 50 % du liant de type polyuréthane non expansé en mousse, dans lequel article l'isocyanate modifié en uréthane est le produit de réaction
i) d'un polyisocyanate aliphatique ou aromatique ou d'un mélange de tels composés, utilisé en excès stoechiométrique,
ii) et d'une composition de polyols comprenant un polyéther-polyol (b1) qui présente une masse molaire de 1000 à 12000 et qui a été obtenu par alcoxylation d'au moins un amorceur de formule (I) :
HₘA-(CH₂)ₙ-N(R)-(CH₂)ₚ-AHₘ (I)
dans laquelle
les indices n et p sont des nombres entiers qui valent chacun, indépendamment, de 2 à 6,
A représente, indépendamment en chaque occurrence, un atome d'oxygène, d'azote, de soufre ou d'hydrogène, sous réserve qu'il n'y ait à la fois qu'un seul des symboles A qui représente un atome d'hydrogène,
R représente un groupe alkyle en C₁₋₃,
et l'indice m vaut 0 si A représente un atome d'hydrogène, 1 si A représente un atome d'oxygène, et 2 si A représente un atome d'azote,
ou de formule (II) :
H₂N-(CH₂)t-N(R)-H (II)
dans laquelle
l'indice t est un nombre entier qui vaut de 2 à 12,
et R représente un groupe alkyle en C₁₋₃,
et dans lequel article le matériau en particules est un caoutchouc élastomère.

2. Procédé de fabrication d'un article composite, constitué d'un matériau en particules notablement revêtues d'un liant de type polyuréthane non expansé en mousse et liées ensemble par ce liant, lequel procédé comporte une première étape où l'on met ledit matériau en particules en contact intime avec une composition d'isocyanate modifié en uréthane, et une étape ultérieure où on laisse le mélange résultant durcir pour donner l'article composite, **caractérisé en ce que** l'isocyanate modifié en uréthane est le produit de réaction
a) d'un polyisocyanate aliphatique ou aromatique ou d'un mélange de tels composés, utilisé en excès stoechiométrique,
b) et d'une composition de polyols comprenant un polyéther-polyol (b1) qui présente une masse molaire de 1000 à 12000 et qui a été obtenu par alcoxylation d'au moins un amorceur de formule (I) :
HₘA-(CH₂)ₙ-N(R)-(CH₂)ₚ-AHₘ (I)
dans laquelle
les indices n et p sont des nombres entiers qui valent chacun, indépendamment, de 2 à 6,
A représente, indépendamment en chaque occurrence, un atome d'oxygène, d'azote, de soufre ou d'hydrogène, sous réserve qu'il n'y ait à la fois qu'un seul des symboles A qui représente un atome d'hydrogène,
R représente un groupe alkyle en C₁₋₃,
et l'indice m vaut 0 si A représente un atome d'hydrogène, 1 si A représente un atome d'oxygène, et 2 si A représente un atome d'azote,
ou de formule (II) :
H₂N-(CH₂)t-N(R)-H (II)
dans laquelle
l'indice t est un nombre entier qui vaut de 2 à 12,
et R représente un groupe alkyle en C₁₋₃,
et dans lequel procédé le matériau en particules est un caoutchouc élastomère.

3. Article stratifié comportant une première couche en contact avec une deuxième couche, dans lequel au moins l'une de ces première et deuxième couche est un article composite conforme à la revendication 1.

4. Tapis comportant une surface textile à poils tuftés, qui comprend des mèches de fils insérées par tuftage dans un substrat de tuftage, et un dos en élastomère, fait de petits fragments d'élastomère et d'un liant, qui est un article composite conforme à la revendication 1.

5. Tapis conforme à la revendication 4, obtenu par un procédé comportant les étapes suivantes :
- mélanger de petits fragments d'élastomère et un liant,
- étaler en une couche le mélange de fragments et de liant,
- disposer sur cette couche un élément à surface textile, pour en faire une ébauche de tapis assemblée,
- et presser cette ébauche de tapis assemblée, tout en faisant en sorte que le liant prenne, de manière à ce que les petits fragments d'élastomères soient rendus solidaires et forment ainsi un dos en élastomère qui renferme des vides entre les petits fragments d'élastomère, et à ce que l'élément à surface textile soit collé au dos en élastomère.
